**Europäisches Patentamt**

**European Patent Office**

**Office européen des brevets**

(19)

(11) Veröffentlichungsnummer: **0 086 860**
**A1**

(12) # EUROPÄISCHE PATENTANMELDUNG

(21) Anmeldenummer: **82101399.2**

(22) Anmeldetag: **24.02.82**

(51) Int. Cl.³: **F 16 L 37/04**
**F 16 L 37/14**

(43) Veröffentlichungstag der Anmeldung:
**31.08.83 Patentblatt 83/35**

(84) Benannte Vertragsstaaten:
**AT BE CH DE FR GB IT LI LU NL SE**

(71) Anmelder: **kreczik, stefan**
**Neudeck 3**
**D-7101 Langenbrettach(DE)**

(72) Erfinder: **kreczik, stefan**
**Neudeck 3**
**D-7101 Langenbrettach(DE)**

(74) Vertreter: **Patentanwälte Schaumburg, Schulz-Dörlam**
**& Thoenes**
**Mauerkircherstrasse 31**
**D-8000 München 80(DE)**

(54) Anordnung zur Verbindung zweier Rohrenden.

(57) Die Erfindung betrifft eine Verbindungshülse (16) zum Verbinden zweier Rohrenden (12, 14), deren Außendurchmesser geringer ist als der Innendurchmesser der Verbindungshülse. Der radiale Zwischenraum zwischen der Verbindungshülse (16) und den miteinander zu verbindenen Rohrenden (12, 14) ist von einer Dichtungshülse (18) ausgefüllt. Die Verbindungshülse (16) weist mindestens einen quer zur Rohrachse verlaufenden Schlitz (20) auf, der sich über weniger als die Hälfte des Umfanges der Verbindungshülse (16) erstreckt. Dem Schlitz (20) ist ein annähernd hufeisenförmiger Spannbügel (24) zugeordnet, dessen Dicke der axialen Ausdehnung des Schlitzes (20) entspricht und der durch den Schlitz (20) in den radialen Zwischenraum zwischen der Verbindungshülse und dem jeweiligen Rohrende so einpreßbar ist, daß er das jeweilige Rohrende (12, 14) auf mindestens der Hälfte seines Umfanges umschließt.

Fig.2

EP 0 086 860 A1

## Anordnung zur Verbindung zweier Rohrenden

Die Erfindung betrifft eine Anordnung zur Verbindung zweier mit radialem Spiel ineinandersteckbarer Rohrenden, die aus einem mindestens halbstarren Material bestehen.

Unter Rohren aus einem mindestens halbstarren Material seien im folgenden solche Rohre verstanden, die nicht oder nur geringfügig elastisch verformbar sind, wie beispielsweise Rohre aus Metall oder einem harten Kunststoff. Bisher war es üblich, derartige Rohre, beispielsweise Wasserleitungen, über Schraubverbindungen, Quetschverbindungen oder durch Löten miteinander zu verbinden. Bei Schraubverbindungen müssen auf die Enden der miteinander zu verbindenden Rohre Gewinde aufgeschnitten werden, was sehr zeitaufwendig ist. Quetschverbindungen sind nicht für alle Rohrarten und vor allem nicht für höhere Drücke geeignet. Soweit sich die Materialien löten lassen, wie beispielsweise Kupferleitungen, stellen Lötverbindungen zwar eine sehr zuverlässige Art der Verbindung dar, sind jedoch ebenfalls sehr zeitaufwendig. Darüber hinaus ist es schwierig festzustellen, ob eine solche Lötverbindung dicht ist.

Der Erfindung liegt die Aufgabe zugrunde, eine Anordnung der eingangs genannten Art anzugeben, die eine rasche und auch noch bei hohen Drücken zuverlässige Verbindung zweier Rohrenden ermöglicht.

Diese Aufgabe wird erfindungsgemäß dadurch gelöst, daß in dem durchmessergrößeren Rohrende eine den radialen Zwischenraum zwischen den Rohrenden ausfüllende Dichtungshülse angeordnet ist, daß der Mantel des durchmessergrößeren Rohrendes innerhalb der axialen Ausdehnung der Dichtungshülse mindestens einen quer zur Rohrachse verlaufenden Schlitz aufweist, der sich über weniger als die Hälfte des Umfangs des durchmessergrößeren Rohrendes erstreckt, und daß dem Schlitz ein annähernd hufeisenförmiger Spannbügel zugeordnet ist, dessen Dicke der axialen Ausdehnung des Schlitzes entspricht und der durch den Schlitz in den radialen Zwischenraum zwischen den beiden Rohrenden so einpreßbar ist, daß er das durchmesserkleinere Rohrende auf mindestens der Hälfte des Umfangs umschließt.

Durch das Einpressen des Spannbügels in den Schlitz wird das Material der Dichtungshülse eng um das durchmesserkleinere Rohrende gepreßt. Gegebenenfalls wird das durchmesserkleinere Rohrende dabei lokal geringfügig unelastisch verformt, wobei das durchmesserkleinere Rohrende in den Bereichen, in denen es nicht von dem Spannbügel umschlossen ist, gegen die Innenwand des durchmessergrößeren Rohrendes gepreßt wird. Es hat sich in der Praxis gezeigt, daß sich auf diese Weise eine dichte Verbindung zwischen den beiden Rohrenden herstellen läßt, wobei die zur Herstellung der Verbindung benötigte Zeit im Bereich einer Minute liegt, während für eine Rohrverbindung durch Löten oder mittels einer Schraubverbindung mindestens eine halbe Stunde benötigt wird. Ferner wird bei der erfindungsgemäßen Rohrverbindung kein Spezialwerkzeug
benötigt. Es genügt eine Zange oder ein Hammer zum
Eintreiben des jeweiligen Spannbügels in den Schlitz.

Um auch bei größeren Drücken eine dichte Verbindung
zuverlässig zu gewährleisten, sind vorzugsweise zwei
in Umfangsrichtung um 180° und axial gegeneinander
versetzte Schlitze vorgesehen, so daß das durchmesserkleinere Rohrende durch zwei einander entgegengesetzte Spannbügel auf seinem gesamten Umfang eingespannt werden kann. Damit nicht zwischen den beiden
Spannbügeln selbst eine undichte Stelle entstehen kann,
sind die Schlitze vorzugsweise axial derart gegeneinander versetzt, daß die einander axial benachbarten
Schlitzränder annähernd in einer Ebene liegen. Somit
kommen die beiden Spannbügel direkt aneinander zu
liegen, so daß sie gemeinsam praktisch einen das durchmesserkleinere Rohrende auf seinem gesamten Umfang
einspannenden Spannring ergeben. Vorzugsweise liegen
dabei die Schlitze jeweils in einer achsnormalen Ebene.
Die Schlitze lassen sich mühelos durch einen Schnitt in
den Rohrmantel herstellen.

Um zu verhindern, daß die Spannbügel sich aus der durch
den Schlitz festgelegten Ebene entfernen, ist am
Innenumfang des durchmessergrößeren Rohrendes eine
Ringnut ausgebildet, die sich in axialer Richtung über
die Breite beider Schlitze erstreckt. Dadurch werden
die Spannbügel beim Einpressen durch den Nutrand an
einem Ausweichen aus der Schlitzebene gehindert. Die
Ringnut gewährleistet somit, daß die beiden von
einander entgegengesetzten Seiten eingetriebenen
Spannbügel eng aneinander liegen.

Um einerseits das Eintreiben des Spannbügels in den jeweiligen Schlitz zu erleichtern und andererseits ein Verschneiden der Dichtungshülse durch den Spannbügel zu vermeiden, sind an den freien Enden des jeweiligen Spannbügels Einweisungsflächen ausgebildet, die einerseits mit den Schlitzenden und andererseits mit der Dichtungshülse bzw. mit dem Außenumfang des durchmesserkleineren Rohrendes so zusammenwirken, daß sich die freien Schenkel des Spannbügels in den radialen Zwischenraum zwischen den beiden miteinander zu verbindenden Rohrenden schieben.

Der Spannbügel kann so ausgebildet sein, daß er nach dem Eintreiben in den jeweiligen Schlitz praktisch bündig mit der Außenumfangsfläche des durchmessergrößeren Rohrendes abschließt. In diesem Fall kann der Spannbügel aus dem Schlitz praktisch nicht mehr herausgezogen und die Verbindung zwischen den beiden Rohrenden nicht mehr gelöst werden. Soll die Verbindung zwischen den beiden Rohrenden lösbar sein, so ist es zweckmäßig, den Spannbügel an seinem gekrümmten Mittelabschnitt mit einem Ansatz zu versehen, an dem der Spannbügel wieder aus dem Schlitz herausgezogen werden kann. Zweckmäßigerweise ist dieser Ansatz in Form einer Öse ausgebildet, in die man mit einem Haken oder dergleichen eingreifen kann.

Mit der erfindungsgemäßen Anordnung können beispielsweise lange Rohrleitungen aus einzelnen Rohrstücken zusammengesetzt werden, die jeweils ein durchmesserkleineres und ein durchmessergrößeres Rohrende der vorstehend beschriebenen Art aufweisen. Ein noch wichtigerer Anwendungsfall der vorstehend beschriebenen Anordnung eribt sich aber in dem Fall, daß das durchmessergrößere Rohrende an einem Rohrverbindungsstück ausgebildet ist, das vorzugsweise mindestens ein weieres gleichartiges Rohrende zum Anschluß eines weiteren durchmesserkleineren Rohrendes aufweist, wobei die Dichtungshülsen der Anschlußenden des Rohrverbindungsstückes einstückig miteinander ausgebildet sind. Beispielsweise kann das Rohrverbindungsstück von einem kurzen zylindrischen Rohrstück gebildet sein, das eine sich über seine gesamte axiale Länge erstreckende Dichtungshülse aufweist und nahe seinen beiden Enden in der oben beschriebenen Weise mit Schlitzen versehen ist. Ein solches Rohrverbindungsstück kann dann zur Verbindung zweier Rohrabschnitte gleichen Durchmessers verwendet werden. Die durchgehende Dichtungshülse stellt sicher, daß zwischen den in das Rohrverbindungsstück eingesteckten Leitungsenden keine undichte Stelle entstehen kann. Dabei wird die Abdichtung noch dadurch verbessert, daß der Druck des durch die Leitung strömenden Fluides die Dichtungshülse gegen die Innenwand des Rohrverbindungsstückes preßt. Trotz der Einfachheit der Montage hat sich diese Art der Rohrverbindung als außerordentlich druckfest erwiesen.

Die beiden Anschlußenden des Rohrverbindungsstücks brauchen jedoch durchaus nicht den gleichen Durchmesser aufzuweisen. Es können auf diese Weise auch mühelos mit Hilfe eines erfindungsgemäßen Rohrverbindungsstückes Leitungen unterschiedlichen Durchmesser miteinander verbunden werden. Das Rohrverbindungsstück kann ferner beispielsweise als T-Stück mit drei Anschlußenden ausgebildet sein. Es kann auch ohne weiteres zusätzlich zu den Anschlußenden der erfindungsgemäßen Art einen herkömmlichen Schraubanschluß aufweisen.

Gemäß einem weiteren Merkmal der Erfindung wird vorgeschlagen, die Verbindungsanordnung als Ganzmetallverbindung auszubilden. Zu diesem Zweck ist erfindungsgemäß vorgesehen, daß die Dichtungshülse aus einem plastisch deformierbaren Weichmetall, wie beispielsweise Weichkupfer, hergestellt ist. Solche Ganzmetallverbindungen sind besonders wichtig für die Verbindung von Rohren, durch die Gase und/oder bestimmte Flüssigkeiten geführt werden.

Bei selbständigen Rohrverbindungsstücken können diese mit einem Isoliermantel versehen sein, der beispielsweise aus einem wärmedämmenden Kunststoffmaterial bestehen kann. Bei den bisher üblichen Lötverbindern war dies nicht möglich, da der Isoliermantel durch die beim Löten entstehende Wärme zerstört wurde. In dem Isoliermantel können entsprechend dem Schlitz in dem Rohrende ausgebildete Schlitze vorgesehen sein. Bei einem dünnen Isoliermantel ist es jedoch auch möglich, ggf. den Isoliermantel mit den Spannbügeln zu durchstechen. Dies vereinfacht die Herstellung der Rohrverbindungsstücke, da sie nach dem Ummanteln nicht mehr bearbeitet zu werden brauchen.

Die folgende Beschreibung erläutert die Erfindung anhand von Ausführungsbeispielen. Es zeigen:

Fig. 1 eine perspektivische Darstellung eines zylindrischen Rohrverbindungsstückes zur Verbindung zweier durchmessergleicher Leitungen,

Fig. 2 einen die Achse enthaltenden Schnitt durch die Verbindungsstelle zweier durchmessergleicher Leitungen mit Hilfe einer in der Fig. 1 dargestellten Anordnung,

Fig. 3 einen achsnormalen Schnitt längs Linie III-III in Fig. 2,

Fig. 4 einen Spannbügel gemäß einer ersten Ausführungsform,

Fig. 5 einen Spannbügel gemäß einer zweiten Ausführungsform,

Fig. 6 eine Seitenansicht eines freien Endes des in Fig. 5 dargestellten Spannbügels in Richtung des Pfeiles P in Fig. 5,

Fig. 7 ein Rohrverbindungsstück für drei miteinander zu verbindende Rohrleitungen,

Fig. 8 ein Rohrverbindungsstück zur Verbindung zweier Rohrleitungen mit unterschiedlichem Durchmesser und

Fig. 9 ein Rohrverbindungsstück, das ein mit einem Schraubverschluß versehenes Anschlußende aufweist.

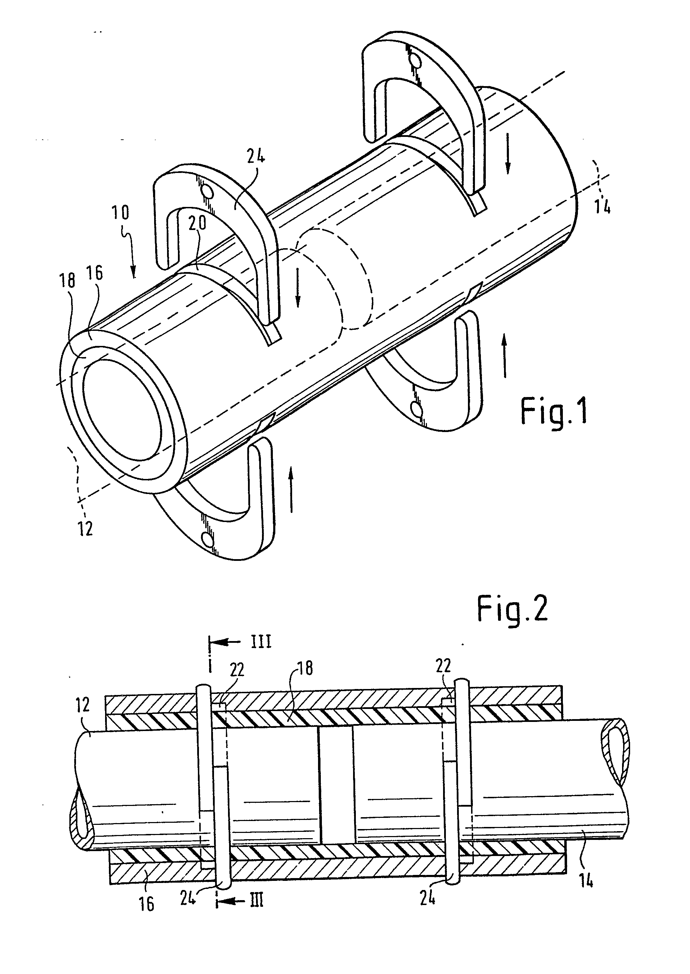

In Fig. 1 und 2 erkennt man einen allgemein mit 10 bezeichneten Rohrverbinder zur Verbindung zweier durchmessergleicher Rohre 12 und 14. Der Rohrverbinder 10 umfaßt ein zylindrisches Rohrstück 16 aus Metall oder einem harten Kunststoff, dessen Innendurchmesser größer als der Außendurchmesser der miteinander zu verbindenden Rohre 12 und 14 ist. Der radiale Zwischenraum zwischen der Außenumfangsfläche der Rohre 12 und 14 und der Innenumfangsfläche des Rohrstückes 16 wird von einer Dichtungshülse 18 ausgefüllt, die in das Rohrstück 16 eingepaßt ist und sich über die gesamte Länge desselben erstreckt. Die Dichtungshülse 18 besteht z.B. aus einem elastisch deformierbaren Dichtungsmaterial wie beispielsweise Polytetrafluoräthylen. Bei der Verbindung von Rohren, die bestimmte Gase oder Flüssigkeiten führen, werden jedoch Dichtungshülsen bevorzugt, die aus einem deformierbaren Metall, wie z.B. Weichkupfer, bestehen, so daß man dichte Ganz-Metall-Verbindungen herstellen kann.

Nahe jedem Ende des Rohrstückes 16 sind zwei Schlitze 20 in dem Mantel des Rohrestückes 16 ausgebildet, deren Schlitzebene im wesentlichen senkrecht zur Rohrachse verläuft und die sich jeweils über etwas weniger als den halben Rohrumfang erstrecken. Die nahe demselben Rohrende gelegenen Schlitze 20 sind in Umfangsrichtung gegeneinander um 180° versetzt. Ferner sind sie in axialer Richtung gegeneinander versetzt, und zwar so, daß die einander benachbarten Schlitzränder in derselben achsnormalen Ebene liegen (siehe Fig. 2).

Im Bereich der Schlitze 20 ist an der Innenumfangsfläche des Rohrstückes 16 eine Ringnut 22 ausgefräst, die sich in axialer Richtung über die Breite der beiden Schlitze 20 erstreckt, wie man dies in Fig. 2 erkennen kann.

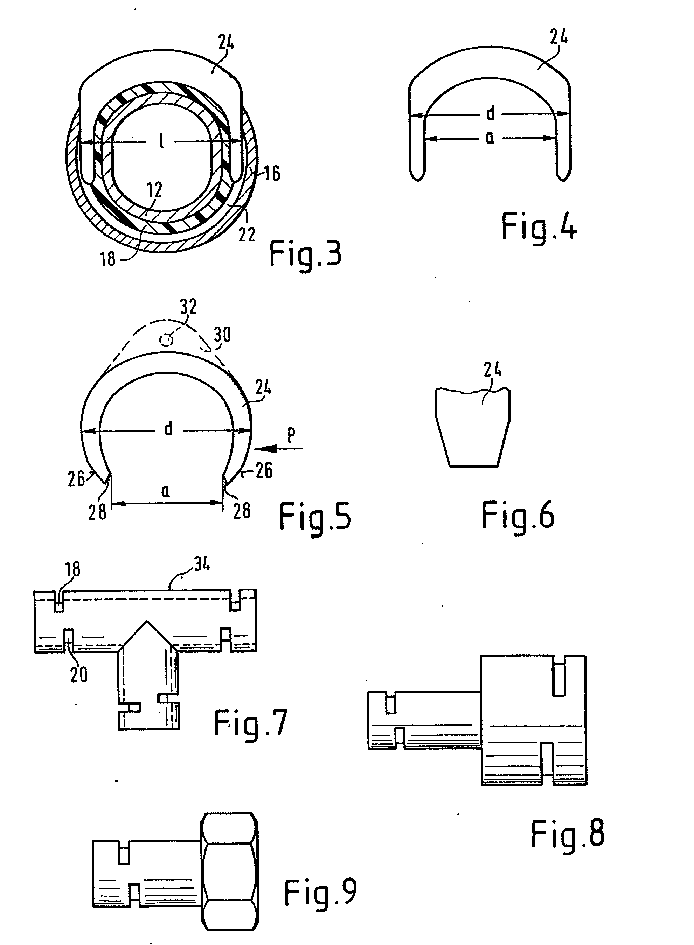

Jedem Schlitz ist ein U-förmiger oder hufeisenförmiger Spannbügel 24 zugeordnet, wie er beispielsweise in den Fig. 4 und 5 einzeln dargestellt ist. Der Außendurchmesser des gekrümmten Mittelabschnittes des Spannbügels 24 entspricht annähernd dem Außendurchmesser des Rohrstückes 16. Die größte Außenabmessung d des Spannbügels im Bereich seiner Bügelschenkel (siehe Fig. 4 und 5) ist etwas größer als die Länge 1 der geraden Verbindungslinie zwischen den Enden eines Schlitzes 20 (siehe Fig. 3). Die kleinste Innenabmessung a (siehe Fig. 4 und 5) zwischen den freien Schenkeln des Spannbügels 24 ist etwa geringer als der Außendurchmesser der Rohre 12 und 14.

Um eine dichte Verbindung zwischen den beiden Rohren 12 und 14 herzustellen, werden diese von beiden Enden her in das Rohrstück 16 soweit eingeführt, daß ihre Enden axial innerhalb der Schlitze 20 liegen. Dann werden die Spannbügel 24 in die Schlitze 20 eingetrieben, wobei die Schenkel der Spannbügel 24 in den Zwischenraum zwischen den Rohren 12 und 14 einerseits und dem Rohrstück 16 andererseits eindringen. Da die Abmessung d der Spannbügel 24 etwas größer als die lichte Länge 1 der Schlitze 20 ist, werden die freien Schenkel der Spannbügel beim Eintreiben zusammengepreßt und pressen ihrerseits das Dichtungsmaterial der Dichtungshülse 18 gegen den Außenumfang der Rohre 12 und 14. Dabei wird nicht nur die Dichtungshülse 18, sondern ggf. auch das Rohr 12 bzw. 14 lokal deformiert, wie dies in Fig. 2 dargestellt ist. Die in die einander gegenüberliegenden Schlitze 20 eingetriebenen Spannbügel 24 überlappen sich und gleiten mit den einander zugewandten Flächen aneinander. Da sie an den Rändern der Nut 22 geführt werden, können sie nicht aus der jeweiligen achsnormalen Schlitzebene ausweichen. Die von einander entgegengesetzten Seiten her eingetriebenen Spannbügel 24 umschließen auf diese Weise die Dichtungshülse 18 und das Rohr 12 bzw. 14 auf dem gesamten Umfang. Aufgrund der Deformation des Rohres 12 bzw. 14 im Bereich der Spannbügel 24 können die Rohre 12 und 14 nicht mehr aus dem Rohrstück 16 herausgezogen werden. Da die Dichtungshülse 18 sich über die gesamte Länge des Rohrstückes 16 erstreckt, kann zwischen den beiden Verbindungsstellen kein Leck auftreten. Dies gilt auch für sehr hohe Drücke, da die Dichtungshülse 18 auf ihrem gesamten Umfang durch die Rohrwand des Rohrstückes 16 abgestützt wird.

Um das Eintreiben der Spannbügel 24 in die Schlitze 20 zu erleichtern, sind an der Außenseite der Bügelschenkel zumindest im Bereich der freien Enden derselben Einweisungsflächen 26 ausgebildet. Um ferner ein Einstechen oder Einschneiden der Bügelenden in das Material der Dichtungshülse 18 zu vermeiden, sind auch auf der Innenseite der Bügelschenkel nahe deren Enden Schrägflächen 28 vorgesehen.

Um sicherzustellen, daß die in derselben Ringnut 22 geführten beiden Spannbügel 24 nich aneinander hängenbleiben, sind auch die quer zur Rohrachse verlaufenden Flächen der Spannbügel 24 an den freien Enden der Bügelschenkel abgeschrägt, wie dies in Fig. 6 dargestellt ist.

Die vorstehende Beschreibung zeigt, daß es zur Herstellung einer dichten und mechanisch festen Rohrverbindung genügt, die beiden miteinander zu verbindenden Rohre 12 und 14 in das Rohr einzustecken und die Spannbügel einzutreiben, was mit Hilfe einer Zange oder eines Hammers erfolgen kann, so daß die gesamte Montage kaum eine Minute benötigt.

Fig. 7 zeigt ein Rohrverbindungsstück in Form eines T-Stücks mit drei Rohranschlüssen. Das Rohrverbindungsstück ist in diesem Fall mit einem Isoliermantel 34 versehen, der z.B. aus einem Kunststoff besteht und z.B. durch Umspritzen eines metallenen Rohrverbindungsstückes hergestellt werden kann. Die Schlitze 20 können dann nachträglich in einem Arbeitsgang in den Isoliermantel 34 und das Rohrverbindungsstück gesägt oder gefräst werden. Ein solcher Isoliermantel ist natürlich auch bei anders geformten Rohrverbindungen möglich. Fig. 8 zeigt ein Rohrverbindungsstück zur Verbindung zweier Rohre mit unterschiedlichen Durchmessern.

Bei den Rohrverbindungsstücken nach den Fig. 7 und 8 kann eine einstückige Dichtungshülse auf einfache Weise dadurch erhalten werden, daß das Rohrverbindungsstück mit einem Kunststoff ausgespritzt wird und anschließend der Kunststoff auf den gewünschten Durchmesser ausgebohrt wird. Bei der Ausführungsform nach Fig. 8 kann auch eine vorgefertigte Dichtungshülse eingesetzt werden.

Fig. 9 schließlich zeigt ein Rohrverbindungsstück, das auf der einen Seite einen herkömmlichen Schraubanschluß und auf der anderen Seite einen Klemmanschluß der erfindungsgemäßen Art aufweist. Die vielseitige Verwendbarkeit, die einfache Herstellung und Handhabung sowie die hohe Zuverlässigkeit auch bei hohen Drücken des durchströmenden Mediums stellen erhebliche Vorzüge des erfindungsgemäßen Rohrverbindungselementes gegenüber den herkömmlichen Verbindungsanordnungen dar. Für den Fall, daß eine Rohrverbindung wieder gelöst werden soll, können die Spannbügel 24 mit einem Ansatz 30 (siehe Fig. 5) versehen sein, der im eingesetzten Zustand der Spannbügel über den Umfang des Rohrstückes 16 hinausragt. In dem Ansatz 30 kann ferner eine Durchbrechung 32 vorgesehen sein, so daß man mit einem Haken den Spannbügel 24 aus dem Schlitz 20 herausziehen kann.

Patentansprüche

1. Anordnung zur Verbindung zweier mit radialem Spiel ineinandersteckbarer Rohrenden, die aus einem mindestens halbstarren Material bestehen, dadurch gekennzeichnet, daß in dem durchmessergrößeren Rohrende (16) eine den radialen Zwischenraum zwischen den Rohrenden (16, 12, 14) ausfüllende Dichtungshülse (18) angeordnet ist, daß der Mantel des durchmessergrößeren Rohrendes (16) innerhalb der axialen Ausdehnung der Dichtungshülse (18) mindestens einen quer zur Rohrachse verlaufenden Schlitz (20) aufweist, der sich über weniger als die Hälfte des Umfanges des durchmessergrößeren Rohrendes (16) erstreckt, und daß dem Schlitz (20) ein annährend hufeisenförmiger Spannbügel (24) zugeordnet ist, dessen Dicke der axialen Ausdehnung des Schlitzes (20) entspricht und der durch den Schlitz (20) in den radialen Zwischenraum zwischen den beiden Rohrenden (16, 12, 14) so einpreßbar ist, daß er das durchmesserkleinere Rohrende (12, 14) auf mindestens der Hälfte seines Umfangs umschließt.

2. Anordnung nach Anspruch 1, dadurch gekennzeichnet, daß zwei in Umfangsrichtung um 180° und axial gegeneinander versetzte Schlitze (20) vorgesehen sind.

3. Anordnung nach Anspruch 2, dadurch gekennzeichnet, daß die Schlitze axial derart gegeneinander versetzt sind, daß die einander axial benachbarten Schlitzränder annähernd in einer Ebene liegen.

4. Anordnung nach einem der Ansprüche 1 bis 3, dadurch gekennzeichnet, daß der Schlitz (20) jeweils in einer achsnormalen Ebene liegt.

5. Anordnung nach einem der Ansprüche 2 bis 4, dadurch gekennzeichnet, daß am Innenumfang des durchmessergrößeren Rohrendes (16) eine Ringnut (22) ausgebildet ist, die sich in axialer Richtung über die Breite beider Schlitze (20) erstreckt.

6. Anordnung nach einem der Ansprüche 1 bis 5, dadurch gekennzeichnet, daß an den freien Enden des Spannbügels (24) mit den Schlitzenden einerseits und der Dichtungshülse (18) bzw. dem Außenumfang des durchmesserkleineren Rohrendes (12, 14) andererseits zusammenwirkende Einweisungsflächen (26, 28) ausgebildet sind.

7. Anordnung nach einem der Ansprüche 1 bis 6, dadurch gekennzeichnet, daß der Spannbügel (24) an seinem gekrümmten Mittelabschnitt einen Ansatz (30) aufweist.

8. Anordnung nach einem der Ansprüche 1 bis 7, dadurch gekennzeichnet, daß die Dichtungshülse (18) aus Polytetrafluoräthylen besteht.

9. Anordnung nach einem der Ansprüche 1 bis 7, dadurch gekennzeichnet, daß die Dichtungshülse (18) aus einem plastisch deformierbaren Metall hergestellt ist.

10. Anordnung nach Anspruch 9, dadurch gekennzeichnet, daß die Dichtungshülse (18) aus Weichkupfer hergestellt ist.

11. Anordnung nach einem der Ansprüche 1 bis 8, dadurch gekennzeichnet, daß das durchmessergrößere Rohrende an einem Rohrverbindungsstück (10) ausgebildet ist.

12. Anordnung nach Anspruch 11, dadurch gekennzeichnet, daß das Rohrverbindungsstück (10) mindestens ein weiteres gleichartiges Rohrende zum Anschluß eines weiteren durchmesserkleineren Rohrendes (12, 14) aufweist und daß die Dichtungshülsen der Anschlußenden des Rohrverbindungsstückes einstückig miteinander ausgebildet sind.

13. Anordnung nach Anspruch 11 oder 12, dadurch gekennzeichnet, daß das Rohrverbindungsstück mindestens einen Schraubanschluß für den Anschluß einer weiteren Leitung aufweist.

14. Anordnung nach einem der Ansprüche 11 bis 13, dadurch gekennzeichnet, daß das Rohrverbindungsstück von einem Isoliermantel (34) umgeben ist.

15. Anordnung nach Anspruch 14, dadurch gekennzeichnet, daß der Isoliermantel (34) aus einem wärmedämmenden Kunststoffmaterial besteht.

Fig.1

Fig.2

STEFAN KRECZIK

0086860

Fig.3

Fig.4

Fig.5

Fig.6

Fig.7

Fig.8

Fig.9

STEFAN KRECZIK

## EUROPÄISCHER RECHERCHENBERICHT

**0086860**
Nummer der Anmeldung

Europäisches
Patentamt

EP 82 10 1399

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| E | DE-A-3 036 189 (KRECZIK) * Ansprüche 1-4; Figuren 1-8 * | 1-15 | F 16 L 37/04 F 16 L 37/14 |
| E | DE-A-3 033 760 (KRECZIK) * Ansprüche 1-11; Figuren 1-8 * | 1-13 | |
| A | GB-A- 902 447 (L. HATHAWAY) * Figuren 1-3 * | 1 | |
| A | US-A-2 535 016 (LAUNDER) * Figur 13 * | 1 | |
| A | CH-A- 126 463 (R. SCHMIDLIN) * Figuren 1,2 * | 1 | |
| A | GB-A-1 136 512 (CONTRAVES) | | |

**RECHERCHIERTE SACHGEBIETE (Int. Cl. 3)**

F 16 L

Der vorliegende Recherchenbericht wurde für alle Patentansprüche erstellt.

| Recherchenort DEN HAAG | Abschlußdatum der Recherche 17-06-1983 | Prüfer ANGIUS P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82